# EUROPEAN PATENT APPLICATION

(11) **EP 2 871 579 A1**
(43) Date of publication of application: **13.05.2015**
(21) Application number: 13878773.4
(22) Date of filing: 11.10.2013
(51) Int. Cl.: G06F 12/08

(54) **METHOD FOR PARTIAL CONSTRUCTION OF SHARE-F STATE IN MULTILEVEL CACHE COHERENCY DOMAIN SYSTEM**

(30) Priority: 22.03.2013 CN 201310093001
(71) Applicant: Inspur Electronic Information Industry Co., Ltd., Jinan City, Shandong 250014 (CN)
(72) Inventor: WANG, Endong, Jinan City Shandong 250014 (CN); CHEN, Jicheng, Jinan City Shandong 250014 (CN); HU, Leijun, Jinan City Shandong 250014 (CN); GAN, Xiaowei, Jinan City Shandong 250014 (CN); GONG, Weifeng, Jinan City Shandong 250014 (CN)
(74) Representative: Isern-Jara, Nuria
(86) International application number: PCT/CN2013/085033
(87) International publication number: WO 2014/146425

(57) **Abstract**

A method of constructing a Share-F state in a local domain of a multi-level cache coherency domain system, includes: 1) when it is requested to access S state remote data at the same address, determining an accessed data copy by inquiring a remote proxy directory RDIR, and determining whether the data copy is in an inter-node S state and an intra-node F state; 2) directly forwarding the data copy to a requester, and recording the data copy of the current requester as an inter-node Cache coherency domain S state and an intra-node Cache coherency domain F state; and 3) after data forwarding is completed, recording, in a remote data directory RDIR, an intra-node processor losing an F permission state as the inter-node Cache coherency domain S state and the intra-node Cache coherency domain F state.

## Description

### TECHNICAL FIELD

The disclosure herein relates to the field of computer system architecture, and in particular, to a method of constructing a Share-F state in a local domain of a multi-level cache coherency domain system.

### BACKGROUND

An MESIF protocol is broadly applied in distributed shared memory computer systems to maintain global Cache coherence of a multi-Cache copy system, wherein: 1) M (Modified) state is a modified state, indicating that cache data is in modified state in a certain CPU, the data is inconsistent with corresponding data in a root memory, and the data is a unique latest copy in the whole system; when the CPU replaces the cache data or other CPUs apply to access the data, a global coherence operation must be caused, so as to write the data back to the root memory and update corresponding data in the root memory; 2) E (Exclusive) state is an exclusive state, indicating that the cache data is in exclusive state in a certain CPU, and other CPU caches do not have the data copy; the data is not modified, and is consistent with corresponding data in the root memory; during running, the CPU possessing the data copy can automatically degrade the data from E state into S state or directly cover and replace the data cache line (that is, change to I state) without notifying the root memory, and the operation does not affect the global cache coherence; 3) S (Shared) state is a shared state, indicating that the data has a copy in one or more CPUs, and copy data is not modified and is consistent with the corresponding data in the root memory; during running, the CPU possessing the data copy can automatically degrade the data from S state into I state without notifying the root memory, and the operation does not affect the global cache coherence; 4) I (Invalid) state is an invalid state, indicating that cache data in a CPU is invalid, and a cache line thereof can be directly covered and replaced without the need of executing a cache coherence operation; 5) F (Forwarding) state is a forwarding state, indicating that the cache data is in shared state having a forwarding function in a certain CPU, in the system, the data state is unique, and the copy is not modified and is consistent with the corresponding data in the root memory; moreover, other CPUs may have one or more identical S state data copies not having state functions.

The only difference between the F state and the S state is that the F state is an S state having a forwarding capability, and the S state does not have the forwarding capability. When a CPU sends an S state type data read request, only cache data in F state may forward the data copy to a data requester, and cache data having a state bit being S state cannot forward the data copy. If the data copy in F state is forwarded from a certain CPU to another CPU, the F state bit migrates along with the data copy; and at this time, a state of the newly generated cache data copy of the requester CPU is changed to F state, and the state of the original CPU data copy is changed to S state.

For an SMP system maintaining global Cache coherence based on a bus snoop manner, because the system has a small scale, and overhead for coherence maintenance is not obvious, at this time, the MESI state protocol can meet requirements, and F state may not be supported. However, for a distributed shared memory system that maintains global Cache coherence based on a directory manner, the MESIF protocol supporting F state may enable shared state data to be forwarded between CPU caches without the need of reading data from a root memory and transmitting the data to a requesting CPU for each request, thereby reducing the overhead of system coherence process; therefore, supporting F state is especially necessary.

A CC-NUMA system is a typical distributed shared memory multi-processor system based on a directory manner. In the CC-NUMA computer system, a node controller plays a key role, the node controller is first interconnected with processors of each server, so as to form a node and an intra-node Cache coherency domain, and then node controllers are connected directly or are interconnected through a node router to form an inter-node interconnection system and an inter-node Cache coherency domain; by using two levels of domains, physical limits such as the number of interconnection ports of processors and Cache coherence maintenance scale can be overcome, thereby forming a large-scale CC-NUMA computer system.

For a CC-NUMA system based on a point-to-point interconnection manner, each processor CPU is integrated with a memory controller and has memorizes connected externally, and manages a section of Cache coherence memory space in the whole system space, so as to become a home proxy of this section of memory space. At this time, if the global Cache coherence is maintained in a bus snoop manner, the number of coherence packets to be processed will increase exponentially along with the increase of the numbers of nodes and CPUs, so that the system coherence maintenance and processing are totally inefficient; therefore, the CC-NUMA system generally adopts a multi-level coherence directory manner to maintain the global Cache coherence, and a data access or coherence permission request for a certain section of space needs to be accessed by a requester processor in a direct-connection manner (if it is located in the same node and same Cache coherency domain with the root processor managing this section of Cache coherence space) or forwarded to a home proxy of the root processor of the root node (at this time, cross-node and cross-Cache coherency domain access is required) through an inter-node interconnection network by using a node controller and update directory information of the home proxy. For cross-node Cache coherence maintenance, the node controller mainly has two functions, one function is serving as a remote proxy for an access of a local node processor to a remote node (two levels of Cache coherency domain transformation logic are required to be implemented), and at this time, the node controller needs to maintain a remote directory to record access information to data of a remote Cache line by the local processor and a coherence state; the other function is serving as a local proxy for data access of a remote node to processors in the local node (two levels of Cache coherency domain transformation logic are required to be implemented), and at this time, the node controller still needs to maintain a local directory to record access information to data of a local Cache line by the remote node and a coherence state. Obviously, this manner causes multi-level hop access and two levels of Cache coherency domain logic transformation are required, which greatly increases delay of the access. Especially, the access to data of a remote Cache line may require multiple coherence operations for implementation, thereby further reducing the efficiency of cross-node access. Therefore, for a CC-NUMA architecture computer system formed by two levels or multiple levels of Cache coherency domains, interconnection bandwidth and efficiency of the intra-node domain are much higher than inter-node interconnection bandwidth and efficiency, and imbalance of memory access is more obvious.

The MESIF protocol supporting the F state may effectively relieve the inter-node interconnection forwarding problem of shared data in an inter-node Cache coherency domain in a CC-NUMA system, and eliminates overhead of reading a data copy from a memory of a root processor of a root node every time, thereby improving efficiency of the coherence processing of the system.

However, it should be noted that, the MESIF protocol cannot solve the problem in mutual forwarding of S state data between processors in a node (it is assumed that certain cache data in the node is in S state), that is, other processors in the node cannot directly obtain the S state cache data copy from the processors in S state of the node, and must send a request to a root node of the data in a cross-node manner and obtain the data from another node having F state data, which increases frequency and processing overhead of cross-node access of the processors.

Therefore, if a local Share-F state can be constructed in an intra-node Cache coherency domain formed by a node controller and processors, and it is allowed that S state cache data having the same address can be directly forwarded in the domain without accessing a root node, the frequency and overhead of cross-node access of the processors can be greatly reduced. From the perspective of the whole system, although multiple F states exists in a two-level domain or multi-level domain Cache coherence system, each Cache coherency domain only has one F state, so that the frequency and overhead of cross-node access of the processors is reduced without being against the global Cache coherence protocol rules.

### SUMMARY

In order to solve the above problems, an objective of the disclosure herein is to provide a method of constructing a Share-F state in a local domain of a multi-level cache coherency domain system, which provides a new solution mainly aimed at the problems of high frequency and high overhead of cross-node access in the prior art, thereby improving performance of a two-level or multi-level Cache coherency domain CC-NUMA system.

In order to achieve the above objective, an embodiment of the disclosure herein is described as follows:
A method of constructing a Share-F state in a local domain of a multi-level cache coherency domain system includes the following steps:
   1) when it is requested to access S state remote data at the same address, determining an accessed data copy by inquiring a remote proxy directory RDIR, and determining whether the data copy is located in an inter-node S state and an intra-node F state;
   2) according to a determination result of step 1), directly forwarding the data copy to a requester, and recording the data copy of the current requester as an inter-node Cache coherency domain S state, intra-node Cache coherency domain F state, that is, a Share-F state, while setting the requested data copy as S state in both the inter-node and intra-node Cache coherency domains; and
   3) after data forwarding is completed, recording, in a remote data directory RDIR, an intra-node processor losing an F permission state as the inter-node Cache coherency domain S state and the intra-node Cache coherency domain F state.

A coherence information record is expressed by three levels of directories, wherein the first level of directory is the remote data directory RDIR located in a remote data proxy unit RP of a node controller, the second level of directory is a local data proxy directory LDIR located in a local data proxy unit LP of the node controller, and the third level is a root directory located in a memory data proxy unit of a root processor.

The S state in the remote data directory RDIR is expressed, in a double-vector expression manner, respectively by using an intra-node flag signal and an inter-node flag signal, and the two flag signals may have inconsistent information, wherein the state in the intra-node Cache coherency domain is labeled as F state and the state in the inter-node Cache coherency domain is labeled as S state, that is, the Share-F state.

It is allowed that S state data copies having the same address construct a Share-F state in every Cache coherency domain, and therefore, multiple F states exist in the whole system, but every Cache coherency domain only has one F state.

The node controller can hook a remote data cache RDC, and cached S state remote data copy is recoded as an inter-node Cache coherency domain S state and an intra-node Cache coherency domain F state.

The method of constructing a Share-F state in a local domain of a multi-level cache coherency domain system of the disclosure herein can effectively support node remote cache data being used by various processors in the node, so as to reduce frequency and overhead of cross-node access, thereby greatly improving system performance of a two-level or multi-level Cache coherency domain CC-NUMA system.

### BRIEF DESCRIPTION OF THE DRAWINGS

FIG. 1 is a schematic diagram of a multi-node multi-processor system structure;
FIG. 2 is a schematic diagram of accessing a memory in a local node according to a first embodiment of the disclosure herein, wherein no local Share-F state exists;
FIG. 3 is a schematic diagram of accessing a memory in a remote node according to a second embodiment of the disclosure herein, wherein no local Share-F state exists;
FIG. 4 is a schematic diagram of accessing a memory in a local node according to a third embodiment of the disclosure herein, wherein a local Share-F state exists; and
FIG. 5 is a schematic diagram of accessing a memory in a remote node according to a fourth embodiment of the disclosure herein, wherein a local Share-F state exists.

### DETAILED DESCRIPTION

In order to make objectives, technical solutions and advantages of the disclosure herein more comprehensible, the disclosure herein is further described in detail in combination with accompanying drawings and embodiments. It should be understood that, the specific embodiments described herein are only used to explain the disclosure herein, and are not intended to limit the disclosure herein.

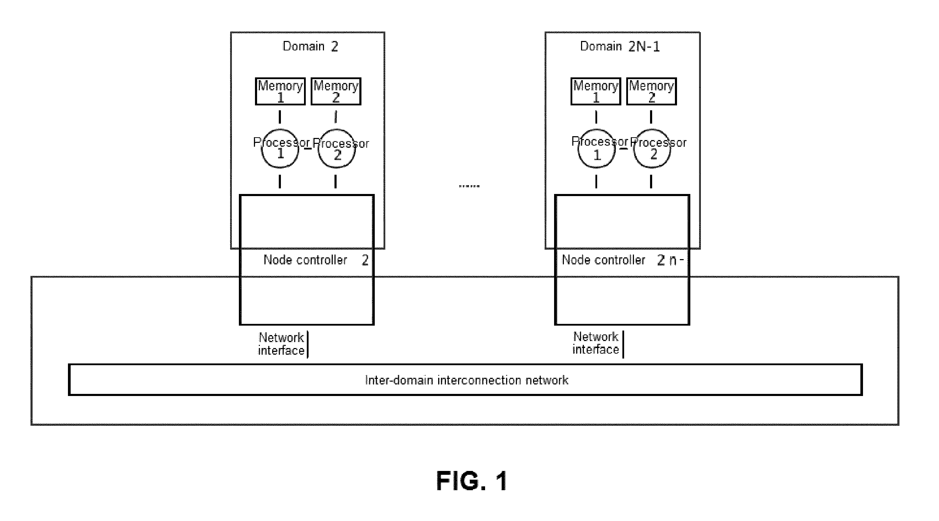

Referring to FIG. 1, each node is formed by 2 processor CPUs and a node NC controller. Various processors and a node controller in a local node are located in an intra-node cache coherency domain, and various node controllers are interconnected by a system interconnection network so as to form an inter-node cache coherency domain, wherein a processor may implement cross-processor data forwarding within a node and implement operations such as cross-node memory access and data forwarding by using a node controller proxy.

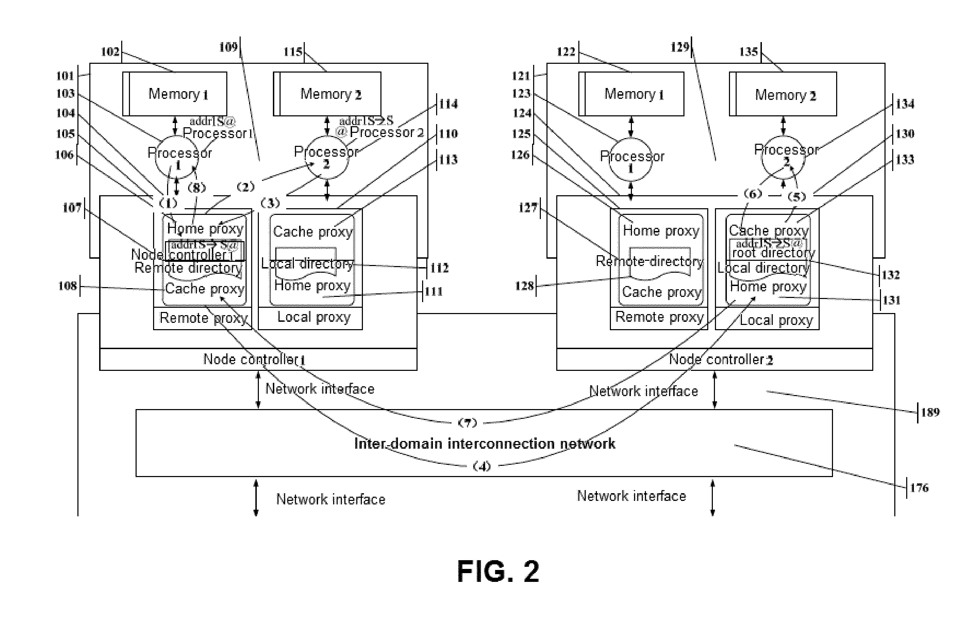

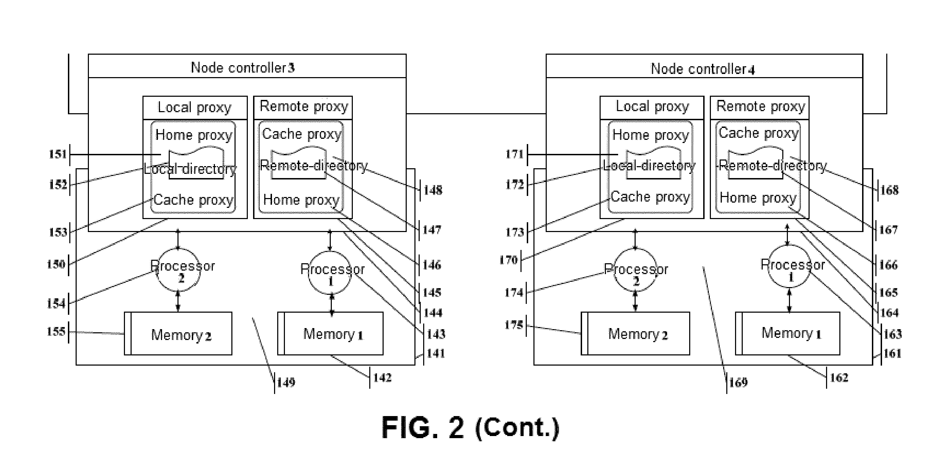

Referring to FIG. 2, a system is formed by 4 node NCs and an inter-node interconnection network (176), each node includes two CPUs, the node NCs and the CPUs in the nodes respectively form intra-node Cache coherency domains, including: a Cache coherency domain (109) in a node NC1, a Cache coherency domain (129) in a node NC2, a Cache coherency domain (149) in a node NC3, and a Cache coherency domain (169) in a node NC4; at the same time, the 4 node NCs construct an inter-node Cache coherency domain (189) by using the inter-domain interconnection network.

In this embodiment, a CPU1 (103) in a node NC1 (104) performs access to a certain root memory at a CPU2 (134) in a remote node NC2 (124), the memory address is addr1, and before the access, a CPU2 (114) at the node NC1 (104) possesses a data copy of the addr1 memory, and a coherence state is S, wherein the access process is described as follows:
1) The processor CPU1 (103) sends an access request and the operation does not hit in a local cache, so that the processor sends a request for accessing data of the memory at the remote root node NC2 to a home proxy HP (106) of a remote data proxy RP (105) unit of the node NC1 (104) controller, the remote data home proxy HP (106) of the node NC1 (104) controller inquires a remote proxy directory RDIR thereof, and finds that the local processor CPU2 (114) has a data copy corresponding to the address addr1 and the coherence state is S, and therefore, the remote data home proxy HP (106) stores access request information, including a request type, an access address, and the like, and then forwards the request to a remote data cache proxy CP (108) of the node NC1 (104);
2) The remote data cache proxy CP (108) of the node NC1 (104) sends an access request message to a local data home proxy HP (131) of a local data proxy unit LP (130) of the remote node NC2 (124) by using the inter-domain interconnection network (176);
3) The home proxy HP (131) of the local data proxy unit LP (130) of the node NC2 stores the access request information (including the request type, the access address, and the like), after checking a local data directory LDIR, finds that other nodes in the inter-node Cache coherency domain (189) do not possess the data copy or only possess a data copy having a coherence state of S state, and then forwards the information to a local cache proxy CP (133); the local cache proxy CP (133) sends the access request information to the processor CPU2 (134);
4) The processor CPU2 (134), after receiving the access request information, extracts data from a memory Mem2 (135) at the address addr1, and returns data information to the local cache proxy CP (133) of the local data proxy unit LP (130) of the node NC2 (124) controller, and the local cache proxy CP forwards the information to the local data home proxy HP (131); the local data home proxy HP (131) updates the local data directory LDIR, and changes coherence state information of a data copy of the node NC1 (104) corresponding to the address addr1 in the inter-node Cache coherency domain (189) from I state into S state; and the home proxy HP (131) sends return information to the remote cache proxy CP (108) of the remote data proxy unit RP (105) of the node NC1 (104) controller through the inter-domain interconnection network (176); and
5) The remote cache proxy CP (108) of the remote data proxy unit RP (105) of the node NC1 (104) receives the return information, and then forwards the return information to the remote data home proxy HP (106), the remote data home proxy HP (106) updates the remote data directory RDIR, changes coherence state information of a data copy of the CPU1 (103) processor corresponding to the address addr1 in the Cache coherency domain (109) in the node NC1 from I state into S state, and sends the return data information to the CPU1 (103).

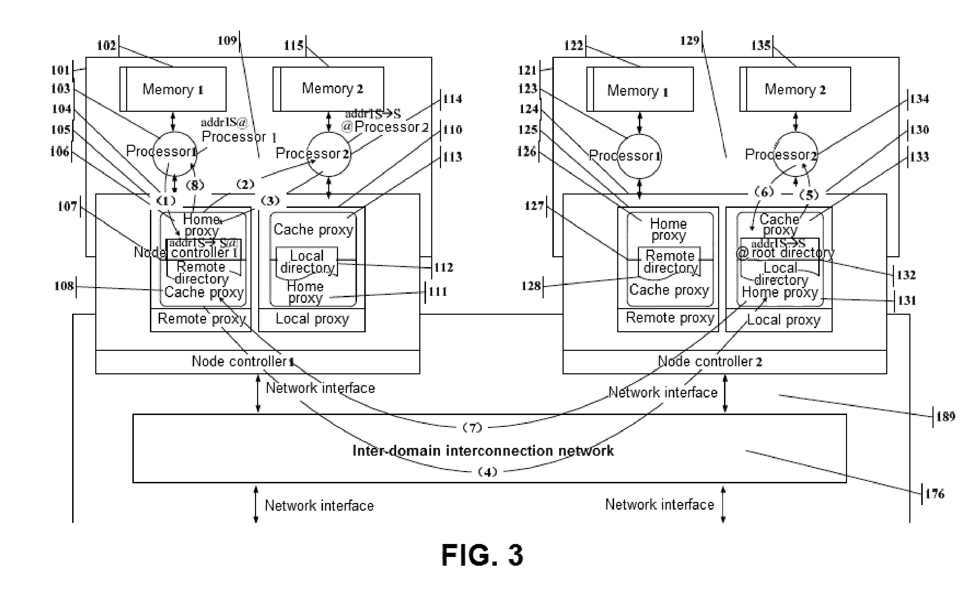

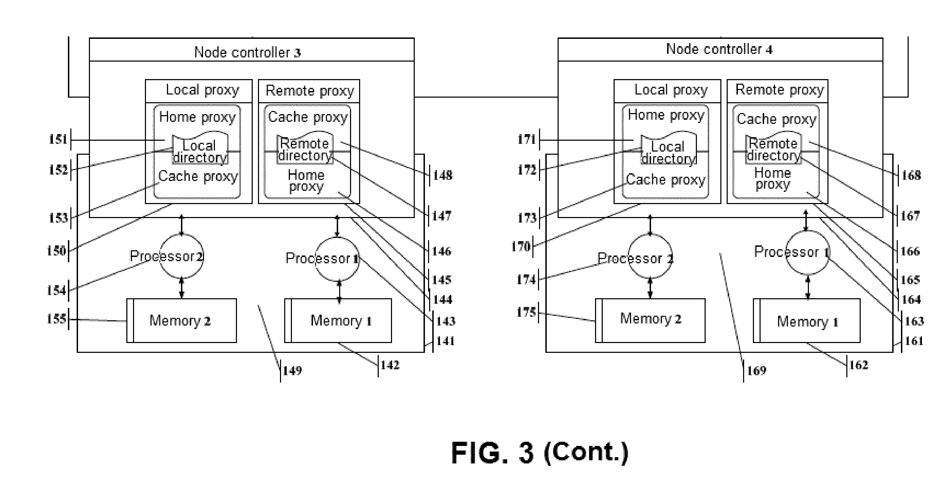

Referring to FIG. 3, a system is formed by 4 node NCs and an inter-node interconnection network (276), each node NC includes two CPUs. The node NCs and the CPUs in the nodes respectively form intra-node Cache coherency domains, including a Cache coherency domain (209) in a node NC1, a Cache coherency domain (229) in a node NC2, a Cache coherency domain (249) in a node NC3, and a Cache coherency domain (269) in a node NC4; at the same time, the 4 node NCs construct an inter-node Cache coherency domain (289) by using the inter-domain interconnection network.

In this embodiment, a CPU1 (243) in a node NC3 (244) performs access to a certain root memory at a CPU2 (234) processor in a remote node NC2 (224), the memory address is addr2. Before the access, a CPU1 (203) processor at a node NC1 (204) possesses a data copy corresponding to the memory address addr2, and a coherence state is F state, wherein the access process is described as follows:
1) The processor CPU1 (243) sends an access request and the operation does not hit in a local cache, so that the processor sends a request for accessing data of a memory at the remote root node NC2 (224) to a remote data home proxy HP (246) of a remote data proxy unit RP (245) in the node NC3 (244) controller, the remote data home proxy HP (246) of the node NC3 (244) controller, after storing access request information (an access type, an access address, and the like), inquires a remote data directory RDIR (247), and finds that other local CPUs do not possess the data copy or possess the data copy but a coherence state thereof is S state, so that the remote data home proxy HP forwards the request to a remote data cache proxy CP (248), and the remote data cache proxy CP (248) sends the access request information to a local data proxy unit LP (230) of the remote node NC2 (224) through the inter-domain interconnection network;
2) A home proxy HP (231) of the local data proxy unit LP (230) of the node NC2 (224) controller stores the access request information (the access type, the access address and the like), inquires a local data directory LDIR (232), and after finding that the data copy corresponding to the address addr2 is located in the node NC1 and is in F state, sends a snoop addr2 packet to a remote data proxy unit RP (205) of the node NC1 (204);
3) A remote data cache proxy CP (208) of the remote data proxy unit RP (205) of the node NC1 (204) controller receives the snoop request sent by the root node NC2 (224), and then forwards the request to a remote data home proxy HP (206); the remote data home proxy HP (206) inquires a remote data directory RDIR (207), and then finds that the CPU1 in the node possesses the data copy of the addr2 memory and the data copy is in F state, then forwards the snoop packet to the CPU1 (203);
4) The CPU1 (203) receives the snoop packet, changes a state of cache data corresponding to the address addr2 from F state into S state, and returns data information with F state to the remote data home proxy HP (206) of the remote data proxy unit RP (205) of the node NC1 (204), and the remote data home proxy HP (206) forwards the returned data information to the remote data cache proxy CP (208), updates the remote data cache directory RDIR (207), and changes the state of the data copy of the CPU1 (203) corresponding to the address addr2 from F state into S state;
5) The remote data cache proxy CP (208) of the remote data proxy unit RP (205) of the node NC1 (204) controller returns snoop information to the home proxy HP (231) of the local data proxy unit LP (230) of the node NC2 (224) through the inter-domain interconnection network, and directly forwards data information corresponding to the address addr2 to the remote data cache proxy CP (248) of the remote data proxy unit RP (245) of the node NC3 (244);
6) The remote data cache proxy CP (248) of the remote data proxy unit RP (245) of the node NC3 (244) receives the data information corresponding to the address addr2 forwarded by the node NC1 (204), and then forwards the data information to the remote data home proxy HP (246); the home proxy HP (246) sends the data information to the processor CPU1 (243), updates the node remote data directory RDIR (247), and changes the state of the data copy of the CPU1 (243) corresponding to the address addr2 from I state into F state; and
7) After receiving the returned data information, the processor CPU1 (243) stores the corresponding data information, and records the coherence state of the data copy corresponding to the address addr2 as F state in the cache directory.

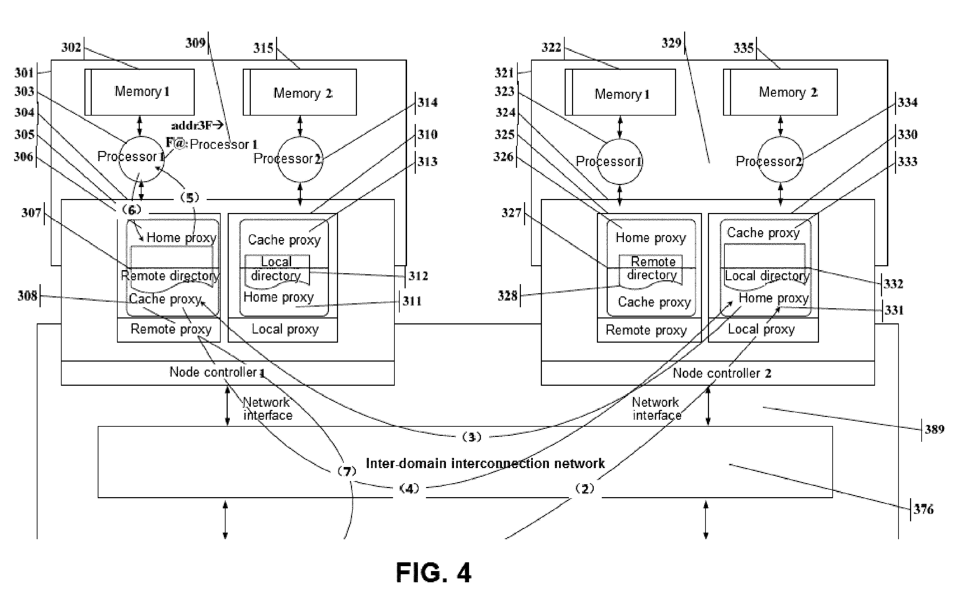

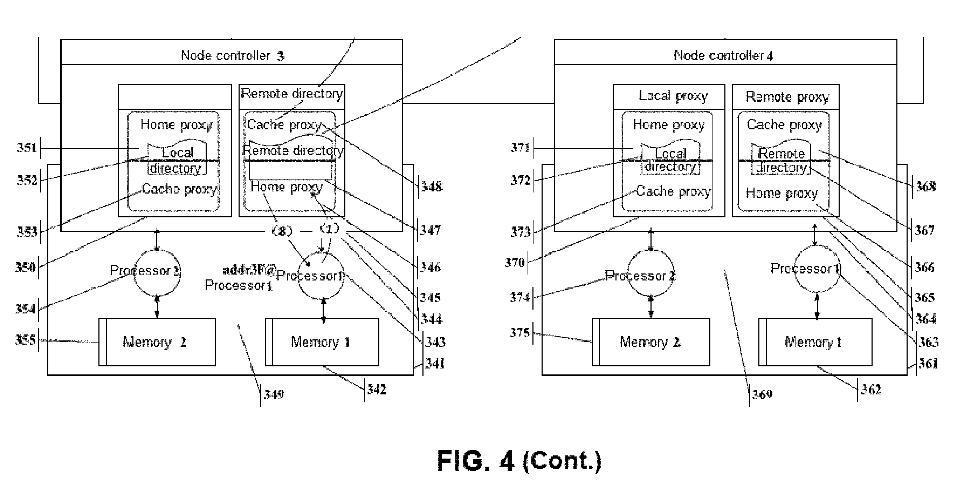

Referring to FIG. 4, a system is formed by 4 node NCs and an inter-node interconnection network (376), each node NC includes two CPUs. The node NCs and the CPUs in the nodes respectively form intra-node Cache coherency domains, including a Cache coherency domain (309) in a node NC1, a Cache coherency domain (329) in a node NC2, a Cache coherency domain (349) in a node NC3, and a Cache coherency domain (369) in a node NC4; at the same time, the 4 node NCs construct an inter-node Cache coherency domain (389) by using the inter-domain interconnection network.

In this embodiment, a CPU1 (343) in a node NC3 (344) performs access to a certain root memory at a CPU2 (334) in a remote node NC2 (324), and the memory address is addr3. Before the access, a CPU1 (303) processor of a node NC1 (304) possesses a data copy of the memory at the address addr3, and a coherence state is F state. An access path is similar to that in the second embodiment, but forwarding and migrating processes of F state in a two-level Cache coherency domain are different, and specific processes are described as follows:
1) The processor CPU1 (343) sends an access request and the operation does not hit in a local cache, so that the processor sends a request for accessing data of a memory at a remote node NC2 (324) to a home proxy HP (346) of a remote data proxy unit RP (345) in the NC3 (344) node controller, the remote data home proxy HP (346) of the node NC3 (344) controller stores access request information (an access type, an access address and the like), then inquires a remote data directory RDIR (347), and finds that other local CPUs do not possess the data copy or possess the data copy but a coherence state thereof is S state, so that the remote data home proxy HP forwards the request to a remote data cache proxy CP (348), and the remote data cache proxy CP (348) sends the access request information to a local data proxy unit LP (330) of the node NC2 (324) through the inter-domain interconnection network;
2) A local data home proxy HP (331) of the local data proxy unit LP (330) of the node NC2 (324) controller stores the access request information (the access type, the access address and the like), inquires a local memory directory LDIR (332) for a state of the data copy of the memory corresponding to the address addr3, and finds that the node NC1 in the inter-node Cache coherency domain region (389) has the data copy and a coherence state is F, then sends a snoop addr3 packet to a remote data proxy unit RP (305) of the node NC1 (304) through the inter-domain interconnection network;
3) A remote cache proxy CP (308) of the remote data proxy unit RP (305) of the node NC1 (304) controller receives the snoop packet sent by the NC2 (324) root node, and then forwards the request to a remote data home proxy HP (306); the home proxy HP (306) inquires a remote data directory RDIR (307), and then finds that the CPU1 (303) in the node possesses the data copy corresponding to the address addr3 and a coherence state is F state; and then the home proxy HP (306) forwards the snoop packet to the CPU1 (303);
4) The CPU1 (303) receives the snoop packet, finds that the snoop packet is an inter-domain snoop packet forwarded by the node NC1 (304), then keeps the state of the data copy corresponding to the address addr2 as F state, and returns data information of F state to the remote data home proxy HP (306) of the remote data proxy unit RP (305) of the node NC1 (304); the remote data home proxy HP (306) forwards the returned data information to the remote data cache proxy CP (308), updates the remote data cache directory RDIR (307), and records the state of the data copy corresponding to the address addr2 in the CPU1 (303) processor as F state in the Cache coherency domain (309) of the node NC1 (304), and changes the state of the data copy corresponding to the address addr3 in the NC1 (304) node of the inter-node Cache coherency domain region (389) from F state into S state;
5) The remote cache proxy CP (308) of the remote data proxy unit RP (305) of the node NC1 (304) sends snoop information to the home proxy HP (331) of the local data proxy unit LP (330) of the node NC2 (324) through the inter-domain interconnection network, and directly forwards data information corresponding to the address addr3 to the remote data cache proxy CP (348) of the remote data proxy unit RP (345) of the node NC3 (344);
6) The home proxy HP (331) of the local data proxy unit LP (330) of the NC2 (324) node receives the returned snoop information, updates the state of the data copy corresponding to the address addr3 in the local memory proxy directory LDIR (332), and changes the state of the data copy corresponding to the address addr3 in the node NC1 (304) of the inter-node Cache coherency domain region (389) from F state into S state, and changes the state of the data copy corresponding to the address addr3 of the node NC3 (344) from I state into F state; and
7) The remote data cache proxy CP (348) of the remote data proxy unit RP (345) of the node NC3 (344) receives the data information corresponding to the address addr3 forwarded by the node NC1 (304), and then forwards the data information to the remote data home proxy HP (346); the home proxy HP (346) sends the data information to the processor CPU1 (343), updates the node remote data proxy directory RDIR (347), changes a cache state corresponding to the address addr3 in the CPU1 (343) processor of the Cache coherency domain (349) in the node NC3 from I state into F state, and changes the state of the data copy corresponding to the address addr3 in the node NC3 (344) of the inter-node Cache coherency domain region (389) from I state into F state.

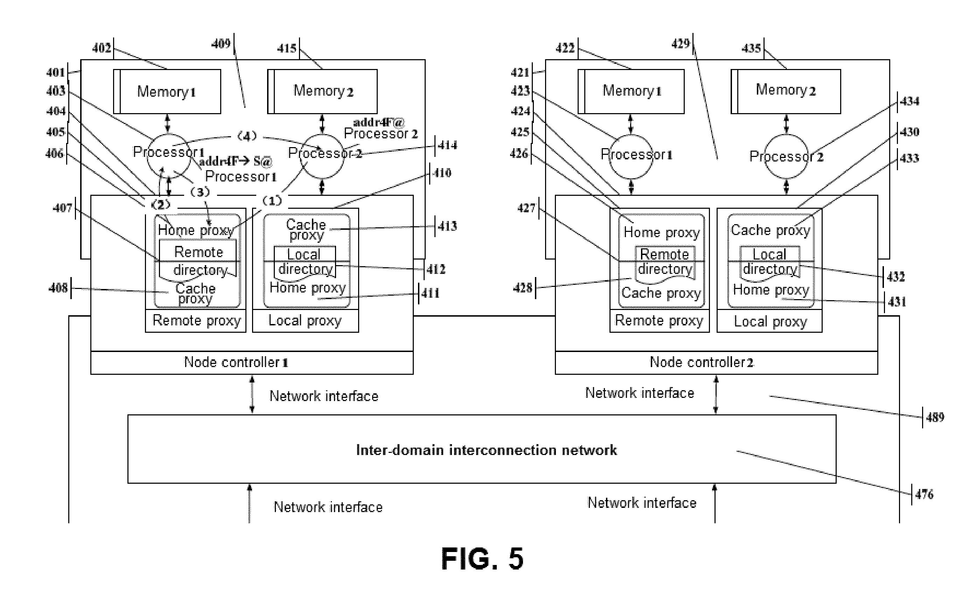

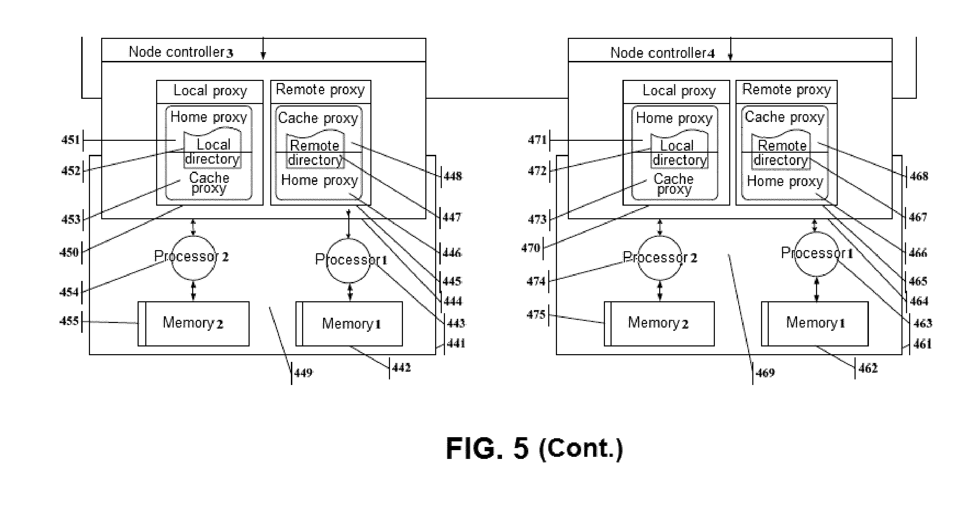

Referring to FIG. 5, a system is formed by 4 node NCs and an inter-node interconnection network (476), each node NC includes two CPUs. The node NCs and the CPUs in the nodes respectively form intra-node Cache coherency domains, including a Cache coherency domain (409) in a node NC1, a Cache coherency domain (429) in a node NC2, a Cache coherency domain (449) in a node NC3, and a Cache coherency domain (469) in a node NC4; at the same time, the 4 node NCs construct an inter-node Cache coherency domain (489) by using the inter-domain interconnection network..

In this embodiment, a processor CPU2 (414) in a node NC1 (404) performs access to a certain root memory at a CPU2 (434) processor in a remote node NC2 (424), and the memory address is addr4. Before the access, a CPU1 (403) processor of the node NC1 (404) possesses a data copy of the memory corresponding to the address addr4, and a coherence state of the data copy is F state. An access process is described as follows:
1) The processor CPU2 (414) in the node NC1 (404) sends an access request and the operation does not hit in a local cache, so that the processor sends a request for accessing data of a memory at a remote root node NC2 (424) to a remote data home proxy HP (406) of a remote data proxy unit RP (405) in the node NC1 (404) controller;
2) The remote data home proxy HP (406) of the remote data proxy unit RP (405) of the node NC1 (404) controller stores access request information (an access type, an access address and the like), then inquires a remote data directory RDIR (407), and finds that the local CPU1 (403) possesses the data copy , and a state of the data copy corresponding to the address addr4 is recorded as F state in the Cache coherency domain (409) of the node NC1 (404), and is recorded as S state in the inter-node Cache coherency domain (489), so that it is determined that the data of the address add4 is in Share-F state in the node NC1 (404);
3) The remote data home proxy HP (406) at the remote data proxy unit RP (405) of the node NC1 (404) controller sends a snoop packet to the CPU1 (403); the processor CPU1 (403) receives the snoop packet, parses the packet and finds that the packet is a request of the processor CPU2 (414) in the node NC1 (404), so that the processor CPU1 sends snoop information to the remote data proxy unit RP (405) of the node NC1 (404) controller, forwards the data information corresponding to the address addr4 and a coherence state to the processor CPU2 (414), updates coherence state information of the data copy corresponding to the address addr4 of the cache directory in the CPU1 (403), and changes the coherence state information from F state into S state;
4) The remote data home proxy HP (406) of the remote data proxy unit RP (405) of the node NC1 (404) controller receives the snoop information, then updates the remote data proxy directory RDIR (407), and changes the state of the data copy corresponding to the address addr4 of the processor CPU1 (403) in the Cache coherency domain (409) in the node NC1 from F state into S state, and changes the state of the data copy corresponding to the address addr4 of the CPU2 (414) from I state into F state; and
5) The processor CPU2 (414) receives the data information corresponding to the address addr4 and the coherence state forwarded by the processor CPU1 (403), and changes the coherence state of the data copy corresponding to the address addr4 in the cache directory thereof from I state into F state.
The above descriptions are only preferred embodiments of the present invention, and are not intended to limit the present invention. Any modification, equivalent replacement and improvement made without departing from the spirit and principle of the present invention shall fall within the protection scope of the preset invention.

## Claims

1. A method of constructing a Share-F state in a local domain of a multi-level cache coherency domain system, comprising the following steps:
1) when it is requested to access S state remote data at the same address, determining an accessed data copy by inquiring a remote proxy directory RDIR, and determining whether the data copy is in an inter-node S state and an intra-node F state;
2) according to a determination result of step 1), directly forwarding the data copy to a requester, and recording the data copy of the current requester as an inter-node Cache coherency domain S state and an intra-node Cache coherency domain F state, that is, a Share-F state, while setting the requested data copy as S state in both the inter-node and intra-node Cache coherency domains; and
3) after data forwarding is completed, recording, in a remote data directory RDIR, an intra-node processor losing an F permission state as the inter-node Cache coherency domain S state and the intra-node Cache coherency domain F state.

2. The method of constructing a Share-F state in a local domain of a multi-level cache coherency domain system according to claim 1, wherein:
a coherence information record is expressed by three levels of directories, wherein the first level of directory is the remote data directory RDIR located in a remote data proxy unit RP of a node controller, the second level of directory is a local data proxy directory LDIR located in a local data proxy unit LP of the node controller, and the third level is a root directory located in a memory data proxy unit of a root processor.

3. The method of constructing a Share-F state in a local domain of a multi-level cache coherency domain system according to claim 2, wherein:
the S state in the remote data directory RDIR is expressed, in a double-vector expression manner, respectively by using an intra-node flag signal and an inter-node flag signal, and the two flag signals may have inconsistent information, wherein the state in the intra-node Cache coherency domain is labeled as F state and the state in the inter-node Cache coherency domain is labeled as S state, that is, the Share-F state.

4. The method of constructing a Share-F state in a local domain of a multi-level cache coherency domain system according to claim 3, wherein:
it is allowed that S state data copies having the same address construct a Share-F state in every Cache coherency domain, and therefore, multiple F states exist in the whole system, but every Cache coherency domain only has one F state.

5. The method of constructing a Share-F state in a local domain of a multi-level cache coherency domain system according to claim 4, wherein:
the node controller can hook a remote data cache RDC, and cached S state remote data copy is recoded as an inter-node Cache coherency domain S state and an intra-node Cache coherency domain F state.
